# EUROPEAN PATENT SPECIFICATION

(11) **EP 0 452 353 B1**
(45) Date of publication and mention of the grant of the patent: **23.08.1995**
(21) Application number: 90900920.1
(22) Date of filing: 05.12.1989
(51) Int. Cl.: F16H 61/00, F16H 47/06

(54) **A CONTROL SYSTEM FOR THE SUPPLY OF PRESSURE MEDIUM TO AN AUTOMATIC TRANSMISSION**
REGELSYSTEM DES ÖLDRUCKES EINES AUTOMATISCHEN GETRIEBES
SYSTEME DE COMMANDE POUR L'AMENEE D'UN MILIEU DE PRESSION A UNE TRANSMISSION AUTOMATIQUE

(30) Priority: 05.12.1988 DE 3840942
(43) Date of publication of application: 23.10.1991
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: STAFFEL, Herman, D-5060 Berg. Gladbach 1 (DE); SVAB, Eugen, D-5000 Koln 71 (DE)
(74) Representative: Messulam, Alec Moses
(86) International application number: GB8901460
(87) International publication number: WO9006457

(56) References cited:
- EP-A- 0 229 900
- EP-A- 0 289 290
- DE-A- 1 630 295
- DE-A- 2 426 975
- DE-A- 3 538 884
- FORD Cruiseomatic control circuit, p. 244, AUTOMATISCHE AUTOMOBILGETRIEBE, J. STÜPER . Berlin 1965

## Description

The invention relates to a control system for supplying pressure medium to an automatic transmission according to the preamble of Claim 1.

Control systems for supplying automatic transmissions with pressure medium are known, in which a single pump driven by the driving motor is used in a pressure medium circuit. Such control systems have the disadvantage that no pressure medium is supplied when the engine is at rest so that vehicles equipped with these control systems cannot be towed in order to set the stationary engine into operation again. In addition, prolonged towing of these vehicles with stationary engine is not possible as lubricant is not being supplied to the transmission.

Control systems for the supply of pressure medium have therefore been developed, in which a primary pump is driven by the driving motor and a secondary pump by the output shaft of the gearbox.

DE-A-16 30 295 discloses a control system of this type. In this system, the primary pump and the secondary pump deliver via check valves into a common pressure medium circuit. The control system is constructed such that the secondary pump is switched on automatically only when the engine is stationary so that power is not consumed unnecessarily.

DE-A-24 26 975 discloses a further control system in which the co-operation between the primary pump and the secondary pump is controlled by the control system in such a manner that only slight losses of power are recorded. The pumps are connected to the delivery duct or are shut off from the delivery duct as a function of the operating state via a special control valve. More precisely, the secondary pump driven by the output shaft of the gearbox is connected to the delivery duct when a control slider of a control valve is not loaded by the primary pump driven by the engine. In addition, delivery by the primary pump is relieved if a gear of a higher speed is engaged when the control pressure applied by the secondary pump driven by the output shaft is sufficiently high.

According to the present invention there is provided a control system for the supply of pressure medium to an automatic transmission of a vehicle, which transmission comprises a change-speed gearbox, a torque converter, a primary pump driven by the engine and a secondary pump driven by the output shaft of the automatic transmission, the control system comprising a valve arrangement by means of which the primary pump and the secondary pump can be set into operation selectively as a function of the operating state of the vehicle, characterised in that the valve arrangement comprises a first pump shift valve and a second pump shift valve which are shut off in a first working range in which the speed of the output shaft is lower than a predetermined value and are switched on in a second working range in which the speed of the output shaft is higher than a predetermined value, a flow control valve, an emergency valve actuated when a high transmission ratio is engaged and a check valve, the valve arrangement being such that in the first working range, the first pump shift valve produces a connection (inlet PUMP1, outlet CFL) from the primary pump via the flow control valve and the second pump shift valve (inlet CFL, outlet CVT) to the hydraulic circuit of the change-speed gearbox and the second pump shift valve, produces a connection via the check valve and the emergency valve between the secondary pump and the circuit of the change-speed gearbox, and, in the second working range, the first pump shift valve interrupts the connection from the primary pump to the flow control valve and second pump shift valve and produces a direct connection (inlet PUMP1, outlet CFE) between the primary pump and the circuit of the torque converter, and the second pump shift valve maintains the connection (inlet LINE2, outlet CVT) between the secondary pump and the circuit of the change-speed gearbox, and in that, in the first working range, the primary pump delivers a predetermined quantity of pressure medium into the circuit of the torque converter via the flow control valve (inlet CFL, outlet CFE) connected between the first pump shift valve and the second pump shift valve.

Ford Cruiseomatic control circuit page 244, Automatische Automobilgetriebe, J. Stüper, Berlin 1965, discloses a hydraulic control circuit for an automatic transmission comprising a torque converter and a gearbox and wherein a front pump is driven by the engine shaft and a rear pump is driven by the output shaft.

The essential advantage of the control system according to the invention is that the pressure medium can be supplied to the various regions of the automatic transmission by the primary pump and the secondary pump individually and therefore optimally with respect to the pressure of the pressure medium and the volumetric flow of the pressure medium. The above-mentioned regions of the automatic transmission can therefore be supplied optimally with minimal power losses.

For example, the circuit of the change-speed gearbox requires small streams of the pressure medium at a high pressure while large streams of pressure medium at low pressure are required for a torque converter. The primary pump driven by the engine is therefore used for supplying the torque converter and, after actuation of the bridging clutch, for transversing the cooler and the lubricating oil supply at low pressure. The secondary pump driven by the output shaft is used for supplying the change-speed gearbox. As the secondary pump produces a speed-dependent volumetric flow, it is switched into the circuit of the change-speed gearbox only when its volumetric flow is at the required value. Until the change-over, the primary pump supplies all the oil to the change-speed gearbox.

In one embodiment of the control system containing solenoid valves, the change-speed gearbox is initially automatically regulated to "HIGH" in the absence of power. An abrupt, harmful transfer of the gearbox to "LOW" can thus be prevented. The secondary pump driven by the output shaft is advantageously used simultaneously as sensor, which indicates that the change-speed gearbox can be adjusted to "LOW" after the automatic transmission has been regulated to "HIGH" if the output shaft attains a low speed or is stationary. The speed at which adjustment takes place can advantageously be adjusted by a simple measure, for example a throttle or orifice plate.

In a further preferred embodiment of the invention, the secondary pump driven by the output shaft is driven only during forward travel by interposition of a one-way clutch or free-wheel. As this pump does not deliver during reverse travel and turning of the one-way clutch, the pressure against which said pump operates can advantageously be applied as a locking signal so that the reverse clutch is automatically separated from the pressure supply and can be relieved when the secondary pump operates and a pressure is present. Accidental engagement of the reverse clutch can therefore be avoided during forward travel.

In a further embodiment of the invention, the transfer of an excessively high, and therefore harmful, torque onto the change-speed gearbox can be prevented during reverse travel. Such a torque could arise if kickdown were applied in the reverse range with the brake pedal depressed.

The invention will now be described further, by way of example, with reference to the accompanying drawings, in which :
Figure 1 shows a section through an automatic transmission, the pressure medium supply of which can be controlled by the present control system, and
Figures 2a and 2b show a circuit diagram of the present control system.

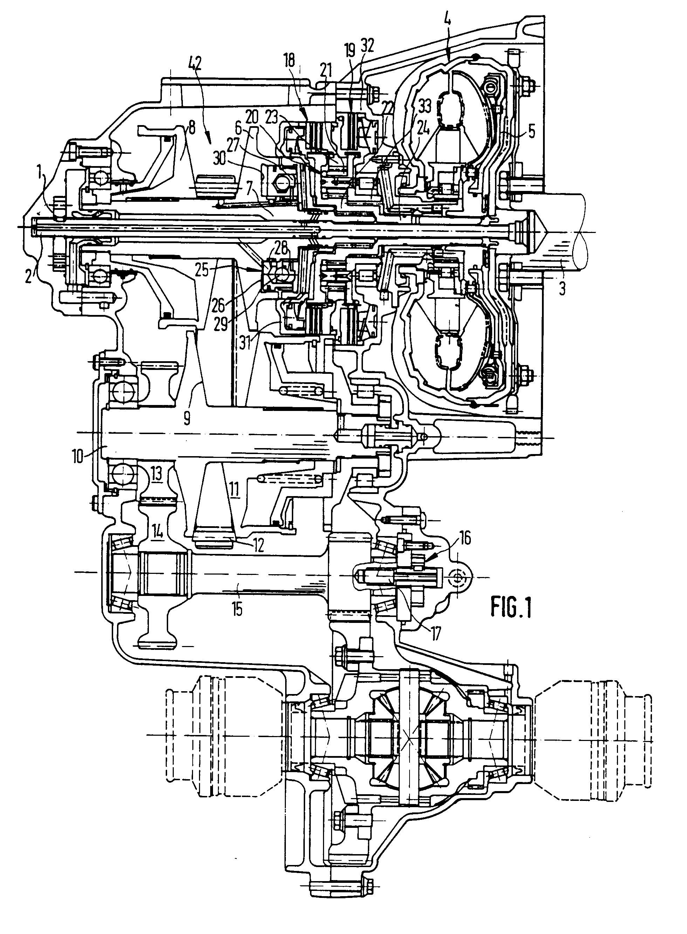

The construction of an automatic transmission having two pumps will now first be described with reference to Figure 1. The primary pump 1, which is preferably a sickle-type gear pump, is mounted on one end of a pump shaft 2, the other end of which is driven by the crankshaft 3 of an engine (not shown in detail). A known torque converter 14 having a lock-up or bridging clutch 5 is located at the end of the pump shaft 2 remote from the primary pump 1. The change-speed gearbox, in the form of a belt-driven continuously variable transmission, comprises (i) a first sheave consisting of an axially fixed conical plate 6 of a primary shaft part 7 arranged concentrically around the pump shaft 2 and an axially movable conical plate 8 fast in rotation with the primary shaft part 7, (ii) a second sheave consisting of an axially fixed conical plate 9, which is part of a secondary shaft 10 and a conical plate 11 fast in rotation with and axially movable along the secondary shaft 10 and (iii) a tensile member or belt 12 which engages the two sheaves to connect the primary shaft part 7 and the secondary shaft 10 to one another. The transmission ratio depends on the separation of the conical plates constituting each sheave.

A gear wheel 13 meshing with a gear wheel 14 rotationally engaged on the output shaft 15 is rotationally engaged on the secondary shaft 10. The secondary pump 16 which preferably also has the form of a sickle gear pump is driven by the output shaft 15. A one-way clutch or free-wheel 17, the operation of which will be described in more detail below, is arranged between the output shaft 15 and the secondary pump 16.

A planetary gear set 20 comprising planet gears 21, a sun gear 22 and a ring gear 23 is located between the torque converter 4 and the forward clutch 18 as well as the reverse clutch 19. The sun gear 22 is formed on a hollow shaft 24 which is arranged concentrically round the pump shaft 2 and is driven by the torque converter 4.

In known manner, the automatic transmission also comprises a torque sensor 25, of the type described, for example, in DE-A-35 38 884. The torque sensor 25 comprises an annular piston 26 and a supporting ring 27 which have on mutually opposed faces respective V-shaped curved tracks 28 which run in the circumferential direction and between which rolling members 29 are arranged. The annular piston part 26 is located axially slidably in an annular cylinder 30 which is formed in the conical plate 6. The supporting ring 27 is rotationally engaged and axially fixed on the primary shaft part 7.

The forward clutch 18, which is preferably constructed as a multiple disc clutch, is formed between the sun gear 22 and a driving bell 31 co-operating via serrations with the annular piston part 26 of the torque sensor 25. The ring gear 23 of the planetary gear set 20 is also formed on the driving bell 31. The reverse clutch 19, which preferably also has the form of a multiple disc clutch, is formed between the casing 32 of the automatic transmission and the planet gear carrier 33 which has the form of an annular plate and is mounted freely rotatably on the hollow shaft 24. An arrangement which is particularly compact in the longitudinal direction of the pump shaft 2 is produced in that the planetary gear set 20 is arranged between the change-speed gearbox and the torque converter 4, wherein said planetary gear set 20 can be constructed compactly in said direction in that a greater number of force-transmitting planet gears are provided.

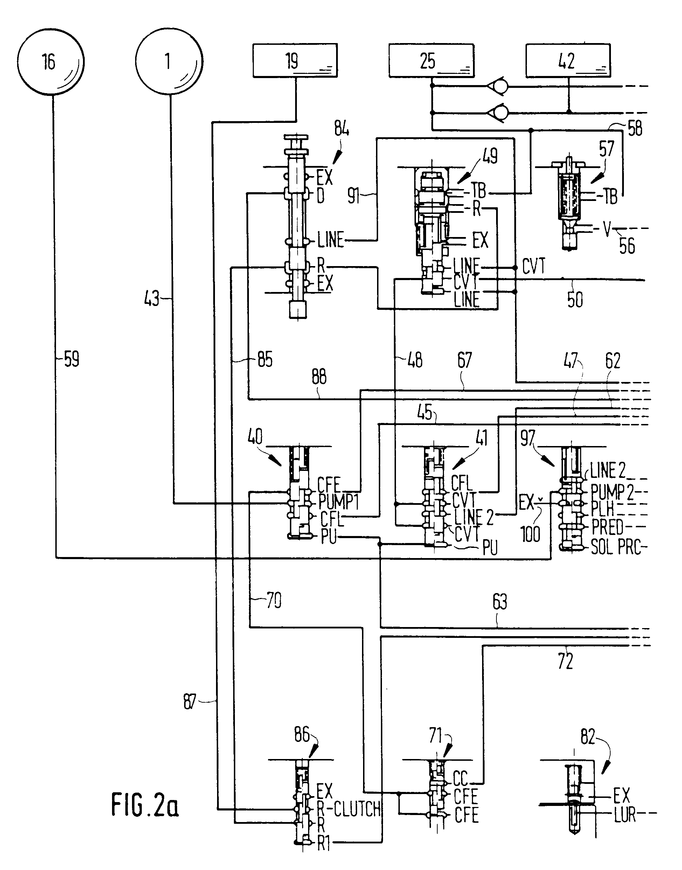

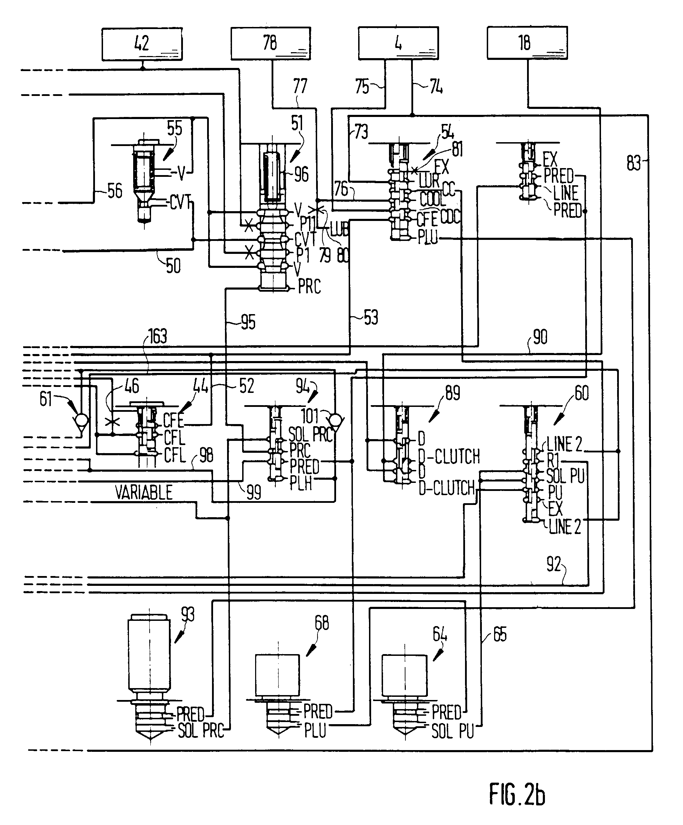

The operation of the control system for the supply of pressure medium to the automatic transmission by the primary pump 1 and the secondary pump 16 is described in more detail below with reference to Figures 2a and 2b. Details of Figure 2, which have already been described in connection with Figure 1, are designated in the same way.

The primary pump 1 and the secondary pump 16 are controlled by a first pump shift valve 40 and a second pump shift valve 41, which are actuated together, so that, in a first working range after start up, the primary pump 1 delivers pressure medium to the torque converter 4 and to the change-speed gearbox 42 while, in this range, the secondary pump also delivers oil to the change-speed gearbox 42 because the primary pump 1 cannot cover the requirement of the change- speed gearbox in this range alone under certain driving conditions. In a second working range, in which the output shaft 15 is rotating at a sufficiently high speed, only the secondary pump 16 delivers pressure medium to the circuit of the change-speed gearbox 42. The primary pump 1 then supplies only the circuit of the torque converter 4.

From start up, in the first working range, the primary pump 1 initially delivers oil via the line 43 to the inlet PUMPl of the pump shift valve 40. In the unactuated state of this pump shift valve 40, the inlet PUMPl is connected to the outlet CFL so that the oil delivered via the line 43 by the primary pump 1 passes from this outlet CFL via the line 45 to the inlet CFL and a corresponding control inlet CFL of a flow control valve 44. The pressure loading of the control inlet CFL actuates the flow control valve 44 (converter volumetric flow valve) in the first working range. The volumetric flow is split in the flow control valve 44, a constant oil stream of, for example, about 3 litres per minute flowing via an orifice plate 46 allocated to the inlet CFL and the associated line 47 to the inlet CFL of the pump shift valve 41 which is also unactuated in the first working range. In the unactuated state of this pump shift valve 41, the inlet CFL thereof is connected to the outlet CVT which is connected via the line 48, a pressure valve 49 (inlet CVT), the line 50 and a transmission ratio control valve 51 (inlet CVT), the operation of which will be described in more detail below, to the circuit of the change-speed gearbox 42.

In the first working range, the primary pump 1 also delivers pressure medium via the outlet CFE of the actuated flow control valve 44, the lines 52, 67 and 70, and converter inlet pressure valve 71, the line 72, the shift valve 54 for the bridging clutch (inlet CC, outlet LUR or COOL) to the torque converter 4 and cooler 78. In the first working range, the primary pump 1 also delivers from the line 50 via a differential pressure valve 55 (inlet CVT, outlet V), the line 56, a pressure valve 57 (inlet V, outlet TB) and the line 58 to the torque sensor 25.

In the first working range, the secondary pump 16 delivers pressure medium via the line 59, an actuated emergency valve 97 (inlet PUMP2, outlet LINE2), the operation of which will be described in more detail below, a check valve 61, the line 62 to the inlet LINE2 of the unactuated pump shift valve 41 and from the outlet CVT thereof via the line 48 in the manner already described, as well as the primary pump 1 into the circuit of the change-speed gearbox 42. The pump shift valves 40 and 41 are changed over by a pressure signal which is applied via a line 63 to the inlets PU of the valves 40 and 41. This pressure signal is produced by actuation of an electromagnetic pump shift valve 64 which produces a pressure control signal on the line 65 as a function of the velocity or speed of rotation of the output shaft 15 at its outlet SOLPU. This pressure control signal is applied via an actuated reverse gear pressure limiting valve 60 (inlet SOLPU, outlet PU), the operation of which will be described in more detail below, to the line 63. The pressure-limiting valve 60 is actuated by the oil which is delivered from the secondary pump 16 in the described manner to the line 62 and is applied from the outlet PUMP2 of the emergency valve 97 via the line 163 to the control inlet LINE2 of the pressure limiting valve 60. After the pump shift valves 40 and 41 have been actuated, the primary pump 1 delivers only into the circuit of the torque converter 4 (line 70). The secondary pump 16 then delivers only into the circuit of the change-speed gearbox 42. The primary pump 1 operates only against the pressure of the torque converter 4, while the secondary pump 16 operates only against the pressure of the change-speed gearbox 42. More precisely, the primary pump 1 delivers via the line 43, the actuated pump shift valve 40 (inlet PUMPl, outlet CFE) and the line 70 to the inlet CFE of the converter inlet pressure valve 71.

On the other hand, the secondary pump 16 delivers via the line 59, the emergency valve 97 (inlet PUMP2, outlet LINE2), the check valve 61, the line 62 to the inlet LINE2 of the pump shift valve 41 now actuated and from the outlet CVT thereof via the line 48 into the circuit of the change-speed gearbox 42.

The control of the torque converter 4 and the supply of lubricating oil to it are described in more detail below. Oil is supplied in the first and second working range through the primary pump 1.

The bridging clutch 5 is actuated by reversing the oil flow through the shift valve 54 for the bridging clutch.

In the first working range, in which the pump shift valves 40 and 41 are not actuated, the oil from the flow control valve 44 (inlet CFL, outlet CFE) not discharged via the orifice plate 46 is supplied via the lines 52, 67, 70 to the inlet of the CFE of the converter inlet pressure valve 71 and the line 53 to the shift valve 54.

In the second working range, in which the two pump shift valves 40 and 41 are actuated, the primary pump 1 delivers via the pump shift valve 40 (inlet PUMP1, outlet CFE) via the lines 67 and 53 to the inlet CFE of the shift valve 54 for the bridging clutch and via the line 70 to the control inlet CFE and the inlet CFE of the converter inlet pressure valve 71. This converter inlet pressure valve 71 is actuated by the pressure at the control inlet CFE, causing oil to be delivered from the inlet CFE to the outlet CC and via the line 72 to the inlet CC of the shift valve 54 for the bridging clutch.

Depending upon the position of the shift valve 54, the oil flows through the torque converter 4 or into the cooler 78. More precisely, when the shift valve 54 for the bridging clutch is not actuated, the oil flows from the inlet CC thereof to the outlet LUR, via the lines 73 and 74, through the torque converter 4, via the line 75 back to the inlet CDC of the shift valve 54 for the bridging clutch and thence to the outlet COOL and the lines 76 and 77 to the cooler 78. A line 80, through which an oil stream LUB flows out to the lubricating oil supply, branches from the lines 76 and 77 via an orifice plate 79.

When the shift valve 54 for the bridging clutch is actuated, the pressure in the line 53 is changed over from the inlet CFE to the outlet CDC. Via the lines 74 and 73, the pressure LUR is reduced at the inlet LUR of the shift valve 54 for the bridging coupling via an orifice plate 81 at the outlet EX.

At the same time, the oil delivered from the inlet CC to the outlet COOL via the lines 76 and 77 is supplied to the cooler 78 and is used via the orifice plate 79 and the line 80 for supplying lubricating oil.

The line 74 communicates via a line 83 with the inlet LUR of an excess pressure valve 82 which protects the torque converter 4 from excess pressure.

The control of the forward clutch 18 and the reverse clutch 19 is described in more detail below. The forward clutch 18 and the reverse clutch 19 can be applied by means of accumulator valves (not shown) or simply by means of damping orifice plates (not shown) as soon as a shift lever (not shown) is suitably set. The shift lever actuates a manual selection valve 84 such that the pressure is applied either via its outlet R, the line 85, the unactuated reverse gear preventing valve 86 (inlet R, outlet R-CLUTCH) and the line 87 to the reverse clutch 19 or via its outlet D, the line 88, the unactuated valve 89 for engagement of the forward clutch (inlet D, outlet D-CLUTCH) and the line 90 to the forward clutch 18.

The pressure is preferably built up in two stages. First, the forward clutch 18 or the reverse clutch 19 is applied by a preliminary pressure and is then controlled via orifice plates or is closed directly as a function of the pressure of the torque sensor 24. The pressure is regulated by the main pressure valve 49. The oil pressure CVT is applied at the inlet CVT of this main pressure valve 49 via the line 48 in the manner already described. The pressure is applied from the inlet CVT to the outlet LINE and from there, via the line 91, to the inlet LINE of the manual selection valve 84. The pressure only arises at the inlet PUMP2 of the emergency valve 97 when the output shaft 15 is revolved in the forward direction because the secondary pump 16 is driven via the one-way clutch 17.

The pressure from the inlet PUMP2 of the emergency valve 97 is applied via the line 163 to the control inlet LINE2 and the inlet LINE2 of the reverse gear pressure limiting valve 60, which is actuated in the process. From the outlet RI of this valve 60, the pressure is applied via the line 92 to the control inlet RI of the reverse gear preventing valve 86, so that this reverse gear preventing valve 86 is actuated and its inlet R-CLUTCH to the outlet EX is relieved, causing the reverse clutch 19 to be disengaged reliably as the forward clutch 18 engages. When the driving shaft 15 revolves in the reverse direction, the secondary pump 16 driven via the one-way clutch 17 no longer delivers oil so that the pressure at the control inlet LINE2 of the reverse gear pressure limiting valve 60 drops, causing this valve 60 to be shut off. From the outlet RI of the valve 60, therefore, no more pressure is applied via the line 92 to the control inlet RI of the reverse gear preventing valve 86, so that this valve is shut off and its inlet R is connected to the outlet R-CLUTCH so that the reverse clutch 19 can be actuated in the manner already described.

The change-speed gearbox 42 is controlled by the transmission ratio control valve 51. The oil pressure at the outlet CVT of the pump shift valve 41 is applied via the line 48 and the line 50 to the inlet CVT of the transmission ratio control valve 51. This transmission ratio control valve 51 is adjusted by the pressure from the outlet SOLPRC of the electromagnetic valve 93. This pressure for controlling the transmission ratio is applied via the actuated low-shift valve 94 (inlet SOLPRC, outlet PRC) and the line 95 to the inlet PRC of the transmission ratio control valve 51. This transmission ratio control valve 51 is adjusted to "LOW" against the force of its spring 96. The speed of adjustment depends on the quantity of oil flowing through the valve 94. For example, an adjusting time of 4 seconds is achieved. The emergency valve 97 is also loaded and actuated by the pressure of the electromagnetic valve 93 at its control inlet SOLPRC. The pressure PRED from the inlet PRED is thus applied via the outlet PLH and the line 98 to the low-shift valve 94 (control inlet PLH). This valve is switched and switches the pressure SOLPRC from the inlet SOLPRC to the outlet PRC.

In the absence of power, the change-speed gearbox is adjusted to "HIGH". This is effected in that the electromagnetic valve 93 for controlling the transmission ratio drops so that no pressure prevails at the inlet SOLPRC of the emergency valve 97, causing the emergency valve 97 to drop as there will also be no pressure at its control inlet SOLPRC. The pressure at the inlet PRED is no longer switched through to the outlet PLH. The pressure PUMP2 is switched through to the outlet PLH and is applied via the line 98 to the control inlet PLH of the low-shift valve 94 as control pressure. The low-shift valve 94 does not drop, so that no pressure is applied via the inlet SOLPRC of the valve 94 to the outlet PRC of the valve 94 and via the line 95 to the inlet PRC of the transmission ratio control valve 51. The transmission ratio control valve 51 is therefore adjusted to "HIGH" by the force of its spring 96.

For subsequent adjustment of the change-speed gearbox to "LOW", the secondary pump 16 driven by the output shaft 15 is used as sensor. If the output shaft 15 is substantially stationary and if the secondary pump 16 no longer delivers oil, meaning that the pressure at the inlet PUMP2 of the dropped emergency valve 97 is near zero, the zero pressure is also applied at the outlet PLH of this valve 97 and via the line 98 at the control inlet PLH of the low-shift valve 94. The valve 94 for adjusting to "LOW" therefore also drops and the pressure from the inlet PRED of this valve 94 is switched through to the outlet PRC and via the line 95 to the control inlet PRC of the transmission ratio control valve 51. The transmission ratio control valve 51 is therefore adjusted to "LOW" against the force of its spring 96. The speed of adjustment depends on the quantity of oil, i.e. on the quantity flowing via the valve 94 for adjustment to "LOW" to the control inlet PRC of the transmission ratio control valve 51. The adjustment time is not critical because start up, on the basis of the torque converter 4 provided, can take place even if the change-speed gearbox is not adjusted to "LOW". The speed at which adjustment to "LOW" takes place can be calibrated by providing the orifice plate 100 allocated to the outlet PLH of the emergency valve 97. As soon as the quantity of oil issuing via the orifice plate 100 and delivered by the secondary pump 16 is greater than the quantity of oil issuing via the line 98 to the check valve 101, the change-speed gearbox is adjusted to "LOW", as described above.

A further feature of the present control system is that an excessive torque can be prevented from being transmitted to the gearbox when reverse gear is engaged if kickdown is applied while the brake is actuated. For this purpose, the pressure is taken from the control inlet LINE2 of the reverse gear pressure limiting valve 60, as the secondary pump 16 does not deliver in reverse gear owing to the one-way clutch 17 provided. The valve 60 therefore drops and the pressure PU is relieved from the pump shift solenoid valve 64, which normally actuates the pump shift valves 40 and 41 via the outlet PU of the reverse gear pressure limiting valve 60 and the line 63, to the outlet EX of the reverse gear pressure limiting valve 60. The pump shift valves 40, 41 are not therefore switched because only the primary pump 1 delivers in the reverse gear. At the same time, the pressure SOLPU is switched from the inlet SOLPU of the reverse gear pressure limiting valve 60 to the outlet RI, so that the reverse gear preventing valve 86 is actuated via the control inlet RI and the reverse clutch 19 is relieved, in the manner already described.

## Claims

1. A control system for the supply of pressure medium to an automatic transmission of a vehicle, which transmission comprises a change-speed gearbox (42), a torque converter (4), a primary pump (1) driven by the engine and a secondary pump (16) driven by the output shaft (15) of the automatic transmission, the control system comprising a valve arrangement by means of which the primary pump (1) and the secondary pump (16) can be set into operation selectively as a function of the operating state of the vehicle, characterised in that the valve arrangement comprises a first pump shift valve (40) and a second pump shift valve (41) which are shut off in a first working range in which the speed of the output shaft (15) is lower than a predetermined value and are switched on in a second working range in which the speed of the output shaft (15) is higher than a predetermined value, a flow control valve (44), an emergency valve (97) actuated when a high transmission ratio is engaged and a check valve (61), the valve arrangement being such that in the first working range, the first pump shift valve (40) produces a connection (inlet PUMP1, outlet CFL) from the primary pump (1) via the flow control valve (44) and the second pump shift valve (41) (inlet CFL, outlet CVT) to the hydraulic circuit of the change-speed gearbox (42) and the second pump shift valve (41), produces a connection via the check valve (61) and the emergency valve (97) between the secondary pump (16) and the circuit of the change-speed gearbox (42), and, in the second working range, the first pump shift valve (40) interrupts the connection from the primary pump (1) to the flow control valve (44) and second pump shift valve (41) and produces a direct connection (inlet PUMP1, outlet CFE) between the primary pump (1) and the circuit of the torque converter (4), and the second pump shift valve (41) maintains the connection (inlet LINE2, outlet CVT) between the secondary pump (16) and the circuit of the change-speed gearbox (42), and in that, in the first working range, the primary pump (1) delivers a predetermined quantity of pressure medium into the circuit of the torque converter (4) via the flow control valve (44) (inlet CFL, outlet CFE) connected between the first pump shift valve (40) and the second pump shift valve (41).

2. A control system according to claim 1, wherein when the speed of the output shaft (15) reaches the predetermined value, an electromagnetic pump shift valve (64) produces a control oil pressure signal which actuates the first and second pump shift valve (40,41) (control inlets PU).

3. A control system according to claim 1 or 2, wherein in the connection between the secondary pump (16) and the second pump shift valve (41) there is connected the emergency valve (97) (inlet PUMP2, outlet LINE2), the control inlet (SOLPRC) of which is loaded by pressure from an electromagnetic valve (93) when power is supplied to the control system, so that the emergency valve (97) is actuated and produces the connection (inlet PUMP2, outlet LINE2) between the secondary pump (16) and the second pump shift valve (41), as well as a low shift valve (94) for adjusting the change-speed gearbox (42) to "LOW" by loading its control inlet (PLH), the emergency valve (97) is actuated from an outlet (PLH), the emergency valve (97) is actuated from an outlet (PLH) so that the low shift valve (94) produces a connection (inlet SOLPRC, outlet PRC) to the control inlet (PRC) of a transmission control valve (51) and loads this transmission control valve (51) with the pressure of the electromagnetic valve (93) so that the transmission control valve (51) is actuated and adjusts the gearbox (42), in that, in the absence of power, the emergency valve (97) shuts off due to a pressure drop at its control inlet (SOLPRC), interrupts the connection (inlet PUMP2, outlet LINE2) between the secondary pump (16) and the second pump shift valve (41) and produces a connection (inlet PUMP2, outlet PLH) to the control inlet (PLH) of the low shift valve (94) so that this low shift valve (94) changes as a function of the value of the applied pressure (PUMP2) and interrupts the connection to the pressure loading of the control inlet (PRC) of the transmission control valve (51) so that the transmission control valve (51) shuts off and adjusts the change-speed gearbox (52) to "HIGH" or produces a connection (inlet PRED, outlet PRC) to the pressure loading so that the control inlet (PRC) of the transmission control valve (51) is loaded with pressure and adjusts the change-speed gearbox to "LOW".

4. A control system according to any one of claims 1 to 3 wherein a shift valve (54) is provided for the bridging clutch, said shift valve (54), in its actuated sate in the first working range, producing a connection (inlet CFE, outlet CDC and inlet LUR, outlet EX) for actuating the bridging clutch (5) and delivering pressure medium supplied from the primary pump (1) via the flow control valve (44) (inlet CFL, outlet CFE) and a converter inlet pressure valve (71) (inlet CFE, outlet CC) into the cooler (78) (inlet CC, outlet COOL) and, in the second working range, delivering the pressure medium delivered from the primary pump (1) via the first pump shift valve (40) (inlet PUMP1, outlet CFE) directly via the converter inlet pressure valve (71) (inlet CFE, outlet CC) and the actuated shift valve (54) (inlet CC, outlet COOL) for the bridging clutch into the cooler (78), and in that the shift valve (54) for the bridging clutch, in the non-actuated state, delivers the pressure medium delivered from the primary pump (1) via the first pump shift valve (40) (inlet PUMP1, outlet CFE) in the non-actuated state via the converter inlet pressure valve (71) (inlet CFE, outlet CC), the control inlet (CFE) of which is also loaded by the pressure medium, via a second connection (inlet CC, outer LUR) toward the torque converter (4) and, when the bridging clutch (5) is opened, through the torque converter (4) and delivers it via a connection (CDC, COOL) into the cooler (78).

5. A control system according to claim 4, wherein an electromagnetic valve (68) is provided for the bridging clutch to load with pressure the control inlet (PLU) of the shift valve (54) for the bridging clutch.

6. A control system according to any one of claims 1 to 4, wherein the secondary pump (16) is driven in the forward direction by the output shaft (15) via a one-way clutch (17), in that a reverse gear preventing valve (86) is provided, which, in the non-actuated state, produces a connection (inlet R, outlet R-CLUTCH) to the pressure medium supply for engagement of the reverse clutch (19) and in that, during operation of the output shaft (15) in the forward direction, a control signal for the control inlet (RI) of the reverse gear preventing valve (86) is derived from the pressure medium pressure produced by the secondary pump (16) at the inlet (PUMP2) of the emergency valve (97), in order to actuate the reverse gear preventing valve (86), so that the connection (outlet R-CLUTCH) to the reverse clutch (18) is relieved (outlet EX).

7. A control system according to claim 6 wherein a reverse gear pressure-limiting valve (60) is provided, at whose control inlet (LINE2) the pressure attributable to the pressure medium delivered by the secondary pump (16) can be applied for actuation of said control inlet (LINE2), in that the reverse gear pressure limiting valve (60), in its actuated state, applies the pressure medium delivered by the secondary pump (16) via a first connection (inlet LINE2, outlet RI) to the control inlet (RI) of the reverse gear preventing valve (86) and in that the reverse gear pressure-limiting valve (60) interrupts the first connection (inlet LINE2, outlet RI) when no pressure is applied to its control inlet (LINE2) during a revolution of the output shaft (15) in reverse operation owing to the provision of the one-way clutch (17).

8. A control system according to claim 7, wherein the reverse gear pressure-limiting valve (60), in the non-actuated state, produces a second connection (inlet SOLUP, outlet RI) by means of which the pressure signal produced by the electromagnetic pump shift valve (64) is applied to the control inlet (RI) of the reverse gear preventing valve (86) when a predetermined torque is achieved in reverse operation, so that this reverse gear preventing valve (86) interrupts the connection (inlet R, outlet R-CLUTCH) in order to disengage the reverse clutch (18).

## Patentansprüche

1. Ein Steuersystem zur Zuführung von Mitteldruck an ein automatisches Getriebe für Fahrzeuge, das Getriebe enthält einen Wechselgetriebekasten (42), einen Drehmomentwandler (4), eine, vom Motor angetriebene Hauptpumpe (1) und eine Sekundärpumpe (16), die von der Ausgangswelle (15) des automatischen Getriebes angetrieben wird, wobei das Steuersystem eine Ventileinheit enthält, durch welche die Hauptpumpe (1) und die Sekundärpumpe (16) wahlweise je nach den Belastungsverhältnissen des Fahrzeugs in Betrieb gesetzt werden können, dadurch gekennzeichnet, dass die Ventileinheit ein erstes Pumpschaltventil (40) und ein zweites Pumpschaltventil (41) enthält, die im ersten Arbeitsbereich, in dem die Geschwindigkeit der Ausgangswelle (15) unter einem vorbestimmten Wert liegt ausgeschaltet und in einem zweiten Arbeitsbereich in dem die Geschwindigkeit der Ausgangswelle (15) über einem vorbestimmten Wert liegt eingeschaltet werden, ein Strömungssteuerventil (44), ein Notventil (97), das bei einem hohen Übersetzungsverhältnis betätigt wird und ein Steuerventil (61), wobei die Ventileinheit so ausgelegt ist, dass im ersten Arbeitsbereich das erste Pumpschaltventil (40) eine Verbindung herstellt (Einlass PUMPE 1, Auslass CFL) von der Hauptpumpe (1) über das Strömungssteuerventil (44) und das zweite Pumpschaltventil (41) (Einlass CFL, Auslass CVT) zu der hydraulischen Schaltung des Wechselgetriebekastens (42) und das zweite Pumpschaltventil (41) stellt eine Verbindung über das Steuerventil (61) und das Notventil (97) zwischen der Sekundärpumpe (16) und der Schaltung des Wechselgetriebekastens (42) her und im zweiten Arbeitsbereich unterbricht das erste Pumpschaltventil (40) die Verbindung von der Hauptpumpe (1) zum Strömungssteuerventil (44) und einem zweiten Pumpschaltventil (41) und stellt eine direkte Verbindung (Einlass PUMPE 1, Auslass CFE) zwischen der Hauptpumpe (1) und der Schaltung des Drehmomentwandlers (4) her und das zweite Pumpschaltventil (41) behält die Verbindung (Einlass LINIE 2, Auslass CVT) zwischen der Sekundärpumpe (16) und der Schaltung des Wechselgetriebekastens (42) bei und dass im ersten Arbeitsbereich die Hauptpumpe (1) eine vorbestimmte Menge Mitteldruck in die Schaltung des Drehmomentwandlers (4) über das Strömungssteuerventil (44) (Einlass CFL, Auslass CFE) leitet, das zwischen dem ersten Pumpschaltventil (40) und dem zweiten Pumpschaltventil (41) angeschlossen ist.

2. Ein Steuersystem nach Anspsruch 1, in dem, wenn dieGeschwindigkeit der Ausgangswelle (15) den vorbestimmten Wert erreicht, ein elektromagnetisches Pumpschaltventil (64) ein Steuersignal für den Öldruck abgibt, welches das erste und zweite Pumpschaltventil (40, 41) betätigt (Steuereinlässe PU).

3. Ein Steuersystem nach dem Anspruch 1 oder 2, mit einer Verbindung zwischen der Sekundärpumpe (16) und dem zweiten Pumpschaltventil (41), in der das Notventil (97) (Einlass PUMPE 2, Auslass LINIE 2) angeschlossen ist, dessen Steuereinlass (SOLPRC), mit dem Druck von einem elektromagentischen Ventil (93) aufgeladen wird, wenn Antriebskraft an das Steuersystem geleitet wird, so dass das Notventil (97) betätigt wird und die Verbindung (Einlass PUMPE 2, Auslass LINIE 2) zwischen der Sekundärpumpe (16) und dem zweiten Pumpschaltventil (41) herstellt, sowie ein niedriges Schaltventil (94), um den Wechselgetriebekasten (42) auf " NIEDRIG " einzustellen durch das Laden seines Steuereinlasses (PLH) wird das Notventil (97) von einem Auslass (PLH) betätigt, so dass das niedrige Schaltventil (94) eine Verbindung (Einlass SOLPRC, Auslass PRC) zum Steuereinlass (PRC) eines Getriebesteuerventils (51) herstellt und dieses Getriebesteuerventil (51) mit dem Druck des elektromagnetischen Ventils (93) auflädt, so dass das Getriebesteuerventil (51) betätigt wird und das Getriebe (42) einstellt, in dem wegen fehlender Antriebskraft das Notventil (97) wegen des Druckverlusts an seinem Steuereinlass (SOLPRC) abschaltet, die Verbindung (Einlass PUMPE 2, Auslass LINIE 2) zwischen der Sekundärpumpe (16) und dem zweiten Pumpschaltventil (41) unterbricht und eine Verbindung (Einlass PUMPE 2, Auslass PLH) zum Steuereinlass (PLH) des niedrigen Schaltventils (94) herstellt, so dass dieses niedrige Schaltventil (94) als Reaktion auf den Wert des angewandten Drucks (PUMPE 2) umschaltet und die Verbindung zum Aufladen des Steuereinlasses (PRC) des Getriebesteuerventils (51) mit Druck unterbricht, so dass das Getriebesteuerventil (51) abschaltet und den Wechselgetriebekasten ( 52) auf " HOCH " einstellt oder eine Verbindung (Einlass PRED, Auslass PRC) zum Druckaufladen herstellt, so dass der Steuereinlass (PRC) des Getriebesteuerventils (51) mit Druck aufgeladen wird und den Wechselgetriebekasten auf " NIEDRIG " einstellt.

4. Ein Steuersystem nach irgendeinem der Ansprüche 1 bis 3, in dem ein Schaltventil (54) für die Brückenschaltkupplung vorgesehen ist, wobei das besagte Schaltventil (54) in seinem betätigten Zustand im ersten Arbeitsbereich eine Verbindung (Einlass CFE, Auslass CDC und Einlass LUR, Auslass EX) herstellt, um die Brückenschaltkupplung (5) zu betätigen und Mitteldruck zu liefern, der von der Hauptpumpe (1) über das Strömungssteuerventil (44) (Einlass CFL, Auslass CFE) und ein Wandlereinlassdruckventil (71) (Einlass CFE, Auslass CC) in den Kühler (78) (Einlass CC, Auslass COOL) kommt und in einem zweiten Arbeitsbereich den von der Hauptpumpe (1) kommenden Mitteldruck über das erste Pumpschaltventil (40) (Einlass PUMPE 1, Auslass CFE) direkt über das Wandlereinlassdruckventil (71) (Einlass CFE, Auslass CC) und das betätigte Schaltventil (54) (Einlass CC, Auslass COOL) für die Brückenschaltkupplung in den Kühler (78) liefert und dass das Schaltventil (54) für die Brückenschaltkupplung im nicht betätigten Zustand den von der Hauptpumpe (1) gelieferten Mitteldruck über das erste Pumpschaltventil (40) (Einlass PUMPE 1, Auslass CFE) im nicht betätigten Zustand über das Wandlereinlassdruckventil (71) (Einlass CFE, Auslass CC) liefert, dessen Steuereinlass (CFE) ebenfalls mit Mitteldruck aufgeladen wird, über eine zweite Verbindung (Einlass CC, Auslass LUR) zu dem Drehmomentwandler (4) und wenn die Brückenschaltkupplung (5) geöffnet ist, durch einen Drehmomentwandler (4) und ihn über eine Verbindung (CDC, COOL) in den Kühler (78) bringt.

5. Ein Steuersystem nach Anspruch 4, in dem ein elektromagnetisches Ventil (68) für die Brückenschaltkupplung vorgesehen ist, um den Steuereinlass (PLU) des Schaltventils (54) für die Brückenschaltkupplung mit Druck aufzuladen.

6. Ein Steuersystem nach irgendeinem der Ansprüche 1 bis 4, in dem eine Sekundärpumpe (16) durch eine Ausgangswelle (15) über eine Einweg-Schaltkupplung (17) in eine Vorwärtsrichtung angetrieben wird, in dem ein Ventil (86) zum Vermeiden des Rückwärtsgangs vorgesehen ist, das im nicht betätigten Zustand eine Verbindung (Einlass R, Auslass R-SCHALTKUPPLUNG) zur Zuleitung von Mitteldruck zum Einrasten der Rückwärtsschaltung (19) herstellt und in dem während des Betriebs der Ausgangswelle (15) in der Vorwärtsrichtung ein Steuersignal für den Steuereinlass (RI) des den Rückwärtsgang vermeidenden Ventils (86) vom Mitteldruck, der von der Sekundärpumpe (16) am Einlass (PUMPE 2) des Notventils (97) erzeugt wurde, abgeleitet wird, um das den Rückwärtsgang vermeidende Ventil (86) zu betätigen, so dass die Verbindung (Auslass R-SCHALTKUPPLUNG zur Rückwärtsschaltung (18) freigegeben wird. (Auslass EX).

7. Ein Steuersystem nach Anspruch 6, in dem ein Rückwärtsgang-Druckbegrenzungsventil (60) vorgesehen ist, an dessen Steuereinlass (LINIE 2) der Druck, der vom Mitteldruck aus der Sekundärpumpe (16) stammt, zur Betätigung des besagten Steuereinlasses (LINIE 2) benutzt werden kann, in dem das Rückwärtsgang-Druckbegrenzungsventil (60) in seinem betätigten Zustand den von der Sekundärpumpe (16) abgegebenen Mitteldruck über eine erste Verbindung (Einlass LINIE 2, Auslass RI) an den Steuereinlass (RI) des den Rückwärtsgang vermeidenden Druckbegrenzungsventils (86) anwendet und in dem das Rückwärtsgang-Druckbegrenzungsventil (60) die erste Verbindung unterbricht (Einlass LINIE 2, Auslass RI) wenn während der Umdrehung der Ausgangswelle (15) kein Druck auf den Steuereinlass (LINIE 2) im Rückwärtsgang wegen der Einweg-Schaltkupplung (17) abgegeben wird.

8. Ein Steuersystem nach Anspruch 7, in dem das Rückwärtsgang-Druckbegrenzungsventil (60)im nicht betätigten Zustand eine zweite Verbindung herstellt (Einlass SOLUP, Auslass RI) durch die das von dem elektromagnetischen Pumpschaltventil (64) erzeugte Drucksignal am Steuereinlass (RI) des den Rüickwärtsgang vermeidenden Ventils (86) angewandt wird, wenn ein vorbestimmter Drehmoment im Rückwärtsbetrieb erreicht wird, so dass dieses den Rückwärtsgang vermeidende Ventil (86) die Verbindung unterbricht (Einlass R, Auslass R-SCHALTKUPPLUNG), um die Rückwärtsschaltkupplung (18) freizugeben.

## Revendications

1. Système de commande d'alimentation en fluide sous pression de la transmission automatique d'un véhicule, transmission qui comprend une boîte de changement de vitesse (42), un convertisseur de couple (4), une pompe principale (1) entraînée par le moteur et une pompe auxiliaire (16) entraînée par l'arbre de sortie (15) de la transmission automatique, le système de commande comprenant un agencement de vannes au moyen duquel la pompe principale (1) et la pompe auxiliaire (16) peuvent être mises en oeuvre de manière sélective en fonction de l'état de fonctionnement du véhicule, caractérisé en ce que l'agencement de vannes comprend une première vanne de commande de pompe (40) et une seconde vanne de commande de pompe (41) qui sont fermées dans une première plage de fonctionnement dans laquelle la vitesse de l'arbre de sortie (15) est inférieure à une valeur prédéterminée et sont ouvertes dans une seconde plage de fonctionnement dans laquelle la vitesse de l'arbre de sortie (15) est supérieure à une valeur prédéterminée, un régulateur de débit (44), une soupape de sûreté (97) actionnée lorsqu'un rapport de transmission élevé est engagé et un clapet de non retour (61), l'agencement de vannes étant tel que, dans la première plage de fonctionnement, la première vanne de commande de pompe (40) établit une liaison (entrée PUMP1, sortie CFL) via le régulateur de débit (44) et la seconde vanne de commande de pompe (41) (entrée CFL, sortie CVT) entre la pompe principale (1) et le circuit hydraulique de la boîte de changement de vitesse (42), et la seconde vanne de commande de pompe (41) établit une liaison via le clapet de non retour (61) et la soupape de sûreté (97) entre la pompe auxiliaire (16) et le circuit de la boîte de changement de vitesse (42), et que, dans la seconde plage de fonctionnement, la première vanne de commande de pompe (40) interrompt la liaison entre la pompe principale (1) et le régulateur de débit (44) et la seconde vanne de commande de pompe (41) et établit une liaison directe (entrée PUMP1, sortie CFE) entre la pompe principale (1) et le circuit du convertisseur de couple (4), et la seconde vanne de commande de pompe (41) maintient la liaison (entrée LINE2, sortie CVT) entre la pompe auxiliaire (16) et le circuit de la boîte de changement de vitesse (42), et en ce que, dans la première plage de fonctionnement, la pompe principale (1) délivre une quantité prédéterminée de fluide sous pression dans le circuit du convertisseur de couple (4) via le régulateur de débit (44) (entrée CFL, sortie CFE) raccordé entre la première vanne de commande de pompe (40) et la seconde vanne de commande de pompe (41).

2. Système de commande selon la revendication 1, dans lequel lorsque la vitesse de l'arbre de sortie (15) atteint la valeur prédéterminée, une vanne électromagnétique de commande de pompe (64) produit un signal de pression d'huile de commande qui actionne les première et seconde vannes de commande de pompe (40, 41) (entrées de commande PU).

3. Système de commande selon la revendication 1 ou 2, dans lequel, dans la liaison entre la pompe auxiliaire (16) et la seconde vanne de commande de pompe (41), est raccordée la soupape de sûreté (97) (entrée PUMP2, sortie LINE2) dont l'entrée de commande (SOLPRC) est chargée par la pression provenant d'une vanne électromagnétique (93) lorsque de l'énergie est fournie au système de commande, de sorte que la soupape de sûreté (97) est actionnée et établit la liaison (entrée PUMP2, sortie LINE2) entre la pompe auxiliaire (16) et la seconde vanne de commande de pompe (41), de même qu'une vanne de commande de passage au rapport de transmission inférieur (94) destinée à régler la boîte de changement de vitesse (42) sur "LOW" (faible rapport de transmission) en chargeant son entrée de commande (PLH), la soupape de sûreté (97) est actionnée à partir d'une sortie (PLH) de sorte que la vanne de commande de passage au rapport de transmission inférieur (94) établit une liaison (entrée SOLPRC, sortie PRC) avec l'entrée de commande (PRC) d'une vanne de commande de la transmission (51) et charge cette vanne de commande de la transmission (51) avec la pression de la vanne électromagnétique (93) de sorte que la vanne de commande de la transmission (51) est actionnée et règle la boite de vitesse (42), en ce que, en l'absence d'énergie, la soupape de sûreté (97) se ferme en raison d'une chute de pression au niveau de son entrée de commande (SOLPRC), interrompt la liaison (entrée PUMP2, sortie LINE2) entre la pompe auxiliaire (16) et la seconde vanne de commande de pompe (41) et établit une liaison (entrée PUMP2, sortie PLH) avec l'entrée de commande (PLH) de la vanne de commande de passage au rapport de transmission inférieur (94) de sorte que cette vanne de commande de passage au rapport de transmission inférieur (94) change d'état en fonction de la valeur de la pression appliquée (PUMP2) et interrompt la liaison avec la charge en pression de l'entrée de commande (PRC) de la vanne de commande de la transmission (51) de sorte que la vanne de commande de la transmission (51) se ferme et règle la boîte de changement de vitesse (52) sur "HIGH" (rapport de transmission élevé) ou établit une liaison (entrée PRED, sortie PRC) avec la charge en pression de sorte que l'entrée de commande (PRC) de la vanne de commande de la transmission (51) est chargée en pression et règle la boîte de changement de vitesse sur "LOW" (faible rapport de transmission).

4. Système de commande selon l'une quelconque des revendications 1 à 3, dans lequel est prévue une vanne de commande (54) de l'embrayage de pontage, ladite vanne de commande (54), dans son état actionné dans la première plage de fonctionnement, établissant une liaison (entrée CFE, sortie CDC et entrée LUR, sortie EX) pour actionner l'embrayage de pontage (55) et délivrant le fluide sous pression fourni par la pompe principale (1) via le régulateur de débit (44) (entrée CFL, sortie CFE) et une vanne de pression d'admission de convertisseur (71) (entrée CFE, sortie CC) dans le refroidisseur (78) (entrée CC, sortie COOL) et, dans la seconde plage de fonctionnement, délivrant le fluide sous pression fourni par la pompe principale (1) via la première vanne de commande de pompe (40) (entrée PUMP1, sortie CFE) directement via la vanne de pression d'admission de convertisseur (71) (entrée CFE, sortie CC) et la vanne de commande (54) (entrée CC, sortie COOL) actionnée de l'embrayage de pontage dans le refroidisseur (78), et en ce que la vanne de commande (54) de l'embrayage de pontage, à l'état non actionné, délivre le fluide sous pression fourni par la pompe principale (1) via la première vanne de commande de pompe (40) (entrée PUMP1, sortie CFE) à l'état non actionné via la vanne de pression d'admission de convertisseur (71) (entrée CFE, sortie CC) dont l'entrée de commande (CFE) est également chargée par le fluide sous pression, via une seconde liaison (entrée CC, sortie LUR) vers le convertisseur de couple (4) et, lorsque l'embrayage de pontage (5) est débrayé, par l'intermédiaire du convertisseur de couple (4) et le délivre via une liaison (CDC, COOL) dans le refroidisseur (78).

5. Système de commande selon la revendication 4, dans lequel une vanne électromagnétique (68) est prévue pour l'embrayage de pontage afin de charger en pression l'entrée de commande (PLU) de la vanne de commande (54) de l'embrayage de pontage.

6. Système de commande selon l'une quelconque des revendications 1 à 4, dans lequel la pompe auxiliaire (16) est entraînée en marche avant par l'arbre de sortie (15) via une roue libre (17), en ce qu'est prévue une vanne d'interdiction de passage en marche arrière (86) qui, à l'état non actionné, établit une liaison (entrée R, sortie R-CLUTCH) avec l'alimentation en fluide sous pression pour l mise en prise de l'embrayage de marche arrière (19) et en ce que, pendant le fonctionnement de l'arbre de sortie (15) en marche avant, un signal de commande destiné à l'entrée de commande (RI) de la vanne d'interdiction de passage en marche arrière (86) est dérivé de la pression du fluide sous pression produite par la pompe auxiliaire (16) au niveau de l'entrée (PUMP2) de la soupape de sûreté (97), afin d'actionner la vanne d'interdiction de passage en marche arrière (86), de sorte que la liaison (sortie R-CLUTCH) avec l'embrayage de marche arrière (18) est déchargée (sortie EX).

7. Système de commande selon la revendication 6, dans lequel est prévue une vanne de limitation de pression en marche arrière (60), à l'entrée de commande (LINE2) de laquelle la pression attribuable au fluide sous pression fourni par la pompe auxiliaire (16) peut être appliquée pour l'actionnement de ladite entrée de commande (LINE2), en ce que la vanne de limitation de pression en marche arrière (60), dans son état actionné, applique le fluide sous pression fourni par la pompe auxiliaire (16) via une première liaison (entrée LINE2, sortie RI) à l'entrée de commande (RI) de la vanne d'interdiction de passage en marche arrière (86) et en ce que la vanne de limitation de pression en marche arrière (60) interrompt la première liaison (entrée LINE2, sortie RI) lorsqu'aucune pression n'est appliquée à son entrée de commande (LINE2) pendant une révolution de l'arbre de sortie (15) en marche arrière en raison de la présence de la roue libre (17).

8. Système de commande selon la revendication 7, dans lequel la vanne de limitation de pression en marche arrière (60), à l'état non actionné, établit une seconde liaison (entrée SOLUP, sortie RI) au moyen de laquelle le signal de pression produit par la vanne électromagnétique de commande de pompe (64) est appliqué à l'entrée de commande (RI) de la vanne d'interdiction de passage en marche arrière (86) lorsqu'un couple prédéterminé est atteint en marche arrière, de sorte que cette vanne d'interdiction de passage en marche arrière (86) interrompt la liaison (entrée R, sortie R-CLUTCH) de manière à débrayer l'embrayage de marche arrière (18).
